# EUROPÄISCHE PATENTSCHRIFT

(11) **EP 0 637 533 B1**
(45) Veröffentlichungstag und Bekanntmachung des Hinweises auf die Patenterteilung: **05.03.1997**
(21) Anmeldenummer: 94111401.9
(22) Anmeldetag: 21.07.1994
(51) Int. Cl.: B60S 9/00, E02F 3/815

(54) **Stützvorrichtung für ein Bergefahrzeug**
Support device for a recovery vehicle
Dispositif de support pour un véhicule de dépannage

(30) Priorität: 04.08.1993 AT 1558/93
(43) Veröffentlichungstag der Anmeldung: 08.02.1995
(73) Patentinhaber: STEYR-DAIMLER-PUCH AKTIENGESELLSCHAFT, 1010 Wien (AT)
(72) Erfinder: Skoff, Gerhard, Dipl.-Ing., A-1130 Wien (AT)

(56) Entgegenhaltungen:
- EP-A- 0 585 624
- DE-A- 2 402 141
- DE-A- 4 126 979
- DE-C- 3 039 364
- DE-U- 8 101 439
- US-A- 3 231 991
- US-A- 4 909 330

## Beschreibung

Die Erfindung betrifft eine Stützvorrichtung für ein Bergefahrzeug, die aus zwei nahe der Fahrzeugseitenkante angeordneten aus einer Transportstellung abwärts in eine Stützstellung schwenkbaren Beinen mit Aufstandsplatten besteht.

Derartige allgemein bekannte Stützvorrichtungen haben den Zweck, das Fahrzeug beim Heben einer Last mittels eines Kragarmes so abzustützen, daß dessen Kippkante möglichst nahe an den Schnittpunkt der Lastangriffslinie mit dem Boden heranrückt. An Bergefahrzeuge für militärische Zwecke werden aber noch weitere Forderungen gestellt: Zum Einen müssen sie auch den mitgeführten Instandsetzungsmannschaften Schutz bieten und deren gedecktes Aussteigen und Arbeiten erleichtern. Deshalb sollen Hubbereich und Abstützung und auch eine Ausstiegstür am Heck des Fahrzeuges vorgesehen sein. Zum Anderen ist es oft auch notwendig, ein beschädigtes Fahrzeug mittels einer bordeigenen Seilwinde zu ziehen, vor allem wenn es zu schwer ist, um gehoben zu werden. Dazu sind erhebliche Zugkräfte nötig, die die Haltekraft der Bremsen übersteigen und bei Radfahrzeugen auch die Bodenhaftung der Räder. Es ist also auch eine Abstützung in horizontaler Richtung nötig.

Aus der DE-C 30 39 364 ist zwar ein Räumschild für einen Bergepanzer bekannt, der dem Fahrzeug sowohl in horizontaler als auch in vertikaler Richtung Stütze bietet. Er erstreckt sich jedoch über die ganze Breite des Fahrzeuges, was nicht nur hohes Eigengewicht und hohe Kosten bedeutet, sondern auch den Ausstieg an der Stirnwand unmöglich macht. Trotzdem ist die horizontale Abstützwirkung begrenzt, weil die Unterkante des Schildes lieber nach Art einer Planieraupe Boden abheben würde als das Fahrzeug am Boden festzuhalten.

Es ist daher Ziel der Erfindung, eine leichte und trotzdem in beiden Zugrichtungen gut wirksame Stützvorrichtung zu schaffen, die zudem leicht einziehbar und gut zugänglich ist.

Erfindungsgemäß wird das dadurch erreicht, daß die Aufstandplatten mit den Beinen um eine horizontale und um eine vertikale Achse schwenkbar verbunden sind und daß beide Aufstandsplatten zur Bildung eines Stützschildes miteinander verbindbar sind.

So können die Aufstandsplatten in zwei verschiedene Arbeitsstellungen gebracht werden. Zum Aufnehmen vertikaler Kräfte liegen sie einzeln flächig am Boden auf, wodurch sie nicht leicht einsinken; zum Aufnehmen horizontaler Kräfte werden sie um beide Achsen geschwenkt und können so einen sich über die ganze Breite des Fahrzeuges erstreckenden Schild bilden, der sich zudem auch noch mit dem richtigen Anstellwinkel in den Boden stemmt.

Dabei bestehen die Aufstandsplatten vorzugsweise aus einer Fußplatte und einer Schildplatte, die miteinander einen stumpfen Winkel einschließen und miteinander verbindbar sind (Anspruch 2). So entsteht ein sich über die gesamte Fahrzeugbreite erstreckender Schild, dessen stumpfe V-Form die Abstützung in horizontaler Richtung begünstigt.

In einer Weiterbildung ist zwischen den Beinen und der Aufstandsplatte eine Gelenkkonsole vorgesehen, die mit dem Bein durch eine horizontale Drehachse und mit der Aufstandsplatte durch einen vertikalen Drehzapfen verbunden ist (Anspruch 3). Dadurch ist die Schwenkbarkeit um zwei Achsen ganz einfach und ohne Kugelgelenk realisiert.

Vorzugsweise greift an der Gelenkkonsole ein Ende einer Strebe exzentrisch zum vertikalen Drehzapfen an und deren anderes Ende am Bein (Anspruch 4). Die Strebe hält sowohl in der Transportstellung als auch in der Arbeitsstellung zur Aufnahme vertikaler Kräfte die Aufstandplatte fest. Eine weitere Befestigungslasche für die Strebe am Bein erlaubt es, die Aufstandsplatte auch in der Stellung für horizontalen Kraftangriff festzuhalten (Anspruch 5).

Zur weiteren Verstärkung bei horizontalem Kraftangriff kann eine Druckstrebe zwischen Fahrzeugkörper und der Schildplatte angebracht sein (Anspruch 6). Wenn schließlich noch die Verbindungsmittel der Aufstandsplatten in Arbeitsstellung vor den Schildplatten angeordnete Träger mit einer Verbindungskupplung sind (Anspruch 7), kann die von den Aufstandsplatten gebildete Schaufel schließlich noch zum Anheben eines havarierten Fahrzeuges verwendet werden.

Im folgenden wird die Erfindung anhand von Abbildungen beschrieben und erläutert. Es stellen dar:
- Figur 1:: Ein Bergefahrzeug mit der erfindungsgemäßen Vorrichtung in einer ersten Arbeitsstellung;
- Figur 2:: Dasselbe Bergefahrzeug in einer zweiten Arbeitsstellung;
- Figur 3:: Dasselbe Fahrzeug in Transportstellung;
- Figur 4:: Detail IV von Figur 1, vergrößert;
- Figur 5:: Schnitt V-V in Figur 4, vergrößert;
- Figur 6:: Detailvariante zu Fig.1.

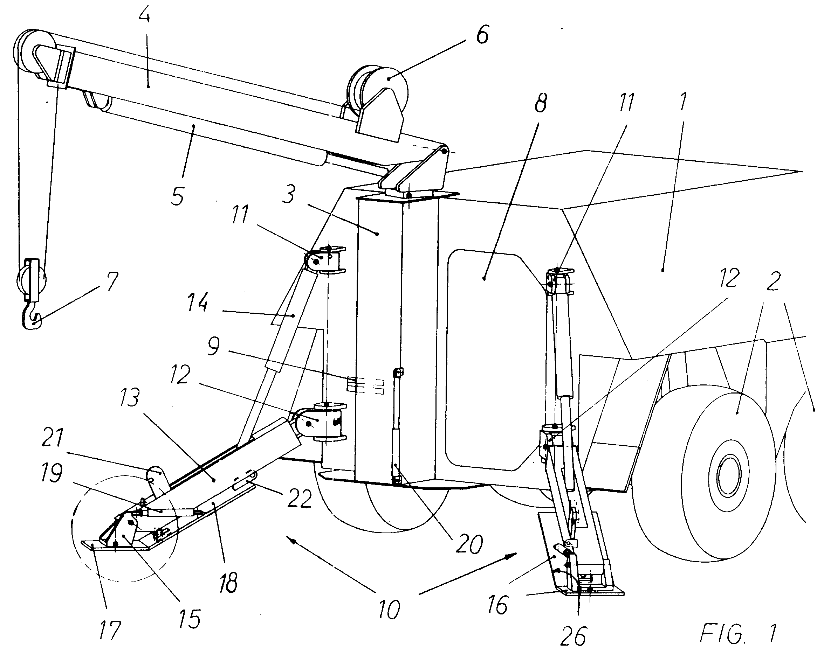

In Fig.1 ist der Körper des Bergefahrzeuges mit 1 bezeichnet und die Räder mit 2. Dazu ist am Heck des Fahrzeugkörpers 1 ein Kranunterteil 3 befestigt, das die üblichen nicht dargestellten Hebe- und Drehvorrichtungen für einen Kragarm 4 aufweist, dessen Azimut durch einen Hubzylinder 5 verstellbar ist. Der Kragarm 4 ist mit einer Hubwinde 6 und mit einem Kranhaken 7 ausgerüstet.

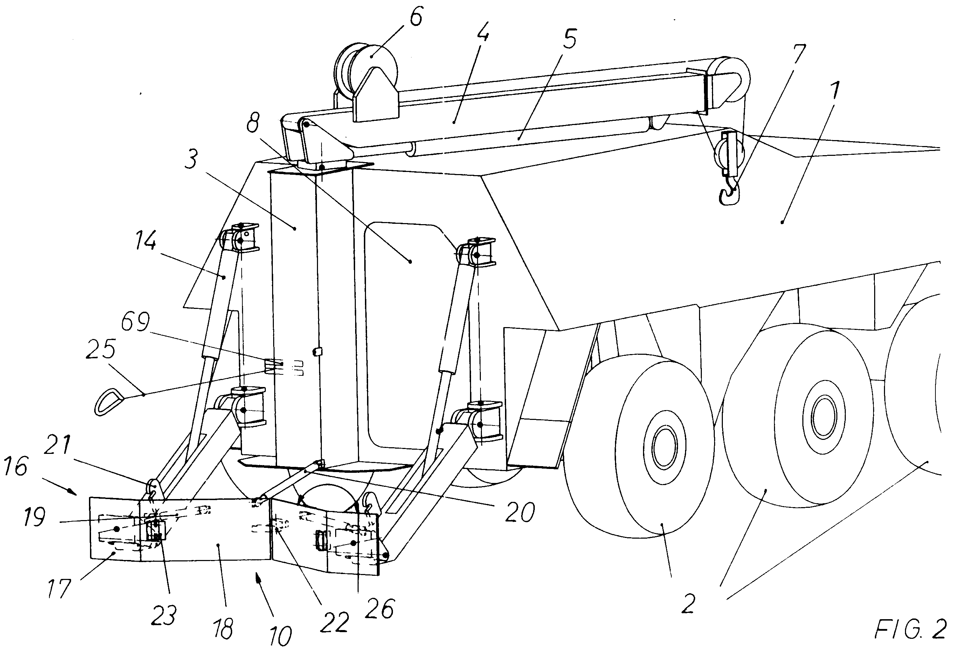

Weiters ist am Heck des Fahrzeuges 1 eine Ausstiegstür 8 für die Mannschaft vorgesehen, ein Ausgangsschlitz 9 für das Zugseil 25 (Fig.2) einer im Inneren des Fahrzeugkörpers 1 untergebrachten Seilwinde zum Ausüben einer ungefähr horizontalen Zugkraft, sowie Abstützvorrichtungen 10 angebracht.

Für die Abstützvorrichtung trägt der Fahrzeugkörper 1 beiderseits obere Befestigungsösen 11 und untere Befestigungsösen 12, an an welchen beiden je ein Bein 13 um eine vertikale und eine horizontale Achse schwenkbar gelagert ist. An den Beinen 13 greifen weiters Hydraulikzylinder 14 an, die sich über die oberen Befestigungsösen 11 am Fahrzeugkörper 1 abstützen. Am äußeren Ende jedes Beines 13 ist über eine Gelenkkonsole 15 eine Aufstandplatte 16 in noch näher zu beschreibender Weise beweglich angeordnet. Jede Aufstandplatte 16 besteht aus einer Fußplatte 17 und aus einer Schildplatte 18, die miteinander einen stumpfen Winkel 26 einschließen. Zwischen Schildplatte 18 und Gelenkkonsole 15 bzw Bein 13 ist eine Strebe 19 vorgesehen und am Heck des Fahrzeugkörpers 1 eine Druckstrebe 20. Auf diese wird weiter unten anhand von Fig.2 näher eingegangen. In Fig.1 befinden sich die Beine 13 in der Stellung, in der sie vertikale Kräfte auf den Boden übertragen können, wenn das Fahrzeug als Kran benützt wird, wobei auf den Kranhaken 7 angenähert vertikale Kräfte wirken.

Fig.2 zeigt dasselbe Fahrzeug bei der Benutzung der auf das Seil 25 wirkenden Seilwinde, wobei die Abstützvorrichtungen 10 angenähert horizontale Kräfte auf den Boden zu übertragen haben. Zu diesem Zweck sind die Aufstandsplatten 16 in eine andere Stellung gebracht, in der sie sich gemeinsam als Schild gegen den Boden stemmen und in noch zu beschreibender Weise um zwei zueinander orthogonale Achsen verschwenkt, mittels der Verbindungsmittel 22 miteinander verbunden und über die Druckstrebe 20 am Fahrzeugkörper 1 abgestützt sind.

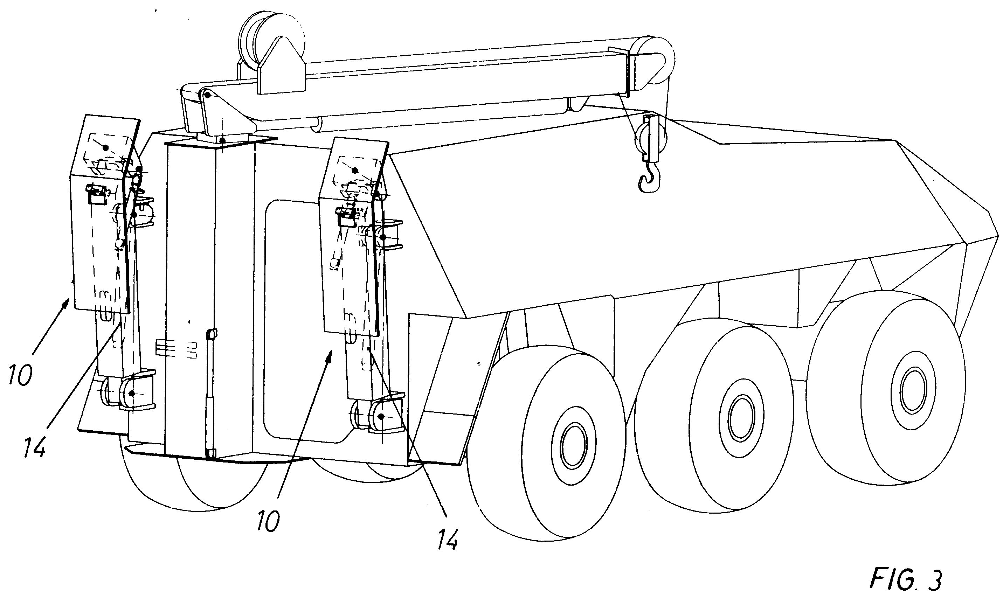

In Fig.3 ist dasselbe Fahrzeug noch in Transportstellung gezeigt, in der die Beine 13 mittels der Hydraulikzylinder 14 ganz hochgeklappt sind, wobei die Befestigungslaschen 21 (in Fig.2 sichtbar) in die oberen Befestigungsösen 11 eingreifen.

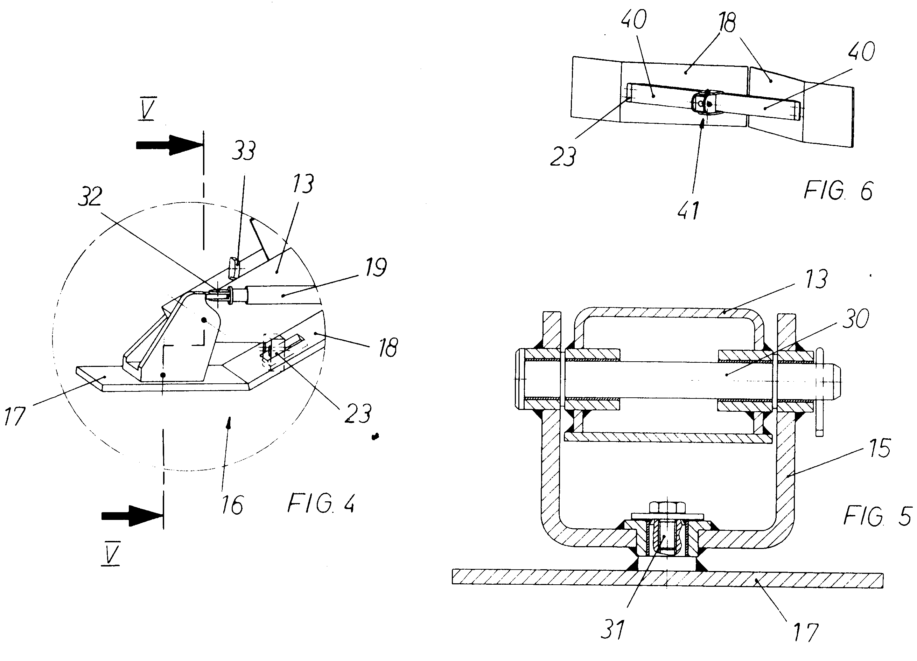

In Fig.4 und 5 ist die Verbindung zwischen Bein 13 und Aufstandsplatte 16 genauer zu erkennen. Zwischen dem Bein 13 und der Gelenkkonsole 15 ist eine horizontale Drehachse 30 vorgesehen, um die die Gelenkkonsole 15 schwenkbar ist. Weiters ist diese Konsole 15 über einen vertikalen Drehzapfen 31 mit der Fußplatte 17 verbunden, der ihre Drehung um eine vertikale Achse ermöglicht. In der Arbeitsstellung der Fig.1 ist die Strebe 19, die mit einem Ende an der Schildplatte 18 befestigt ist, mit ihrem anderen Ende an einer ersten Befestigungslasche 32 abgestützt, die mit der Gelenkkonsole 15 an einer Stelle fest verbunden ist, die bezüglich des vertikalen Drehzapfens 31 exzentrisch ist. So hält die Strebe 19 die Aufstandsplatte 16 in der in Fig.1 gezeigten Stellung.

Soll die Aufstandsplatte 16 nun in die Stellung der Fig.2 gebracht werden, so wird die Verbindung zwischen der Strebe 19 und der ersten Befestigungslasche 32 gelöst, die Aufstandsplatte 16 um den vertikalen Zapfen 31 zuerst gedreht und dann die Gelenkkonsole 15 mit der Aufstandsplatte 16 um die horizontale Achse 30 gedreht, bis die Fußplatte 17 angenähert senkrecht ist. Nun werden die beiden Schildplatten 18 mittels der Verbindungselemente 22 (Fig.1,2) miteinander und die Strebe 19 mit einer zweiten Befestigungslasche 33 verbunden, die zum Unterschied von der ersten Befestigungslasche 32 am Bein 13 befestigt ist.

In Fig.6 ist schließlich noch eine andere Verbindung der beiden Schildplatten 18 angedeutet. An den Schraubblöcken 23 (siehe auch Fig.2, Fig.4) und gegebenenfalls noch an weiteren nicht gezeigten Stellen sind Träger 40 angeschraubt, die über eine Verbindungskupplung 41 miteinander verbunden sind. Diese Verbindungskupplung 41 kann auch benützt werden, um eine Achse eines beschädigten Fahrzeuges vom Boden abzuheben und es auf diese Weise abzuschleppen.

Insgesamt wird durch die Erfindung eine besonders leichte und vielseitige Abstützvorrichtung geschaffen, die trotzdem alle im Bergedienst auftretenden Kräfte in den Boden einleiten kann.

## Patentansprüche

1. Stützvorrichtung für ein Bergefahrzeug, die aus zwei nahe der Fahrzeugseitenkante angeordneten aus einer Transportstellung abwärts in eine Stützstellung schwenkbaren Beinen (13) mit Aufstandsplatten (16) besteht, **dadurch gekennzeichnet**, daß die Aufstandsplatten (16) mit den Beinen (13) um eine horizontale (30) und um eine vertikale (31) Achse schwenkbar verbunden sind und daß beide Aufstandsplatten (16) zur Bildung eines Stützschildes miteinander verbindbar sind.

2. Stützvorrichtung nach Anspruch 1, **dadurch gekennzeichnet**, daß die Aufstandsplatten (16) aus einer Fußplatte (17) und einer Schildplatte (18) bestehen, die miteinander einen stumpfen Winkel (26) einschließen, wobei die Schildplatten (18) Verbindungsmittel (22) aufweisen.

3. Stützvorrichtung nach Anspruch 1, **dadurch gekennzeichnet**, daß zwischen den Beinen (13) und der Aufstandsplatte (16) eine Gelenkkonsole (15) vorgesehen ist, die mit dem Bein (13) durch eine horizontale Drehachse (30) und mit der Aufstandsplatte (16) durch einen vertikalen Drehzapfen (31) verbunden ist.

4. Stützvorrichtung nach Anspruch 3, **dadurch gekennzeichnet**, daß an der Gelenkkonsole (15) ein Ende einer Strebe (19) an einer ersten Befestigungslasche (32) exzentrisch zum vertikalen Drehzapfen (31) und deren anderes Ende am Bein (13) angreift.

5. Stützvorrichtung nach Anspruch 4, **dadurch gekennzeichnet**, daß am Bein eine zweite Befestigungslasche (33) für die Strebe (19) angebracht ist, die die Aufstandsplatte (16) in der Stellung für horizontalen Kraftangriff festhält.

6. Stützvorrichtung nach Anspruch 4, **dadurch gekennzeichnet**, daß eine Druckstrebe (20) zwischen Fahrzeugkörper (1) und der Schildplatte (18) angebracht ist.

7. Stützvorrichtung nach Anspruch 2, **dadurch gekennzeichnet**, daß die Verbindungsmittel der Aufstandsplatten (16) in Arbeitsstellung vor den Schildplatten (18) angeordnete Träger (40) mit einer Verbindungskupplung (41) sind.

## Claims

1. Supporting device for a rescue vehicle consisting of two legs (13) with footing plates (16) located near the lateral vehicle edge and capable of being swivelled from a transportation position down into a supporting position, characterized in that the footing plates (16) are connected to the legs (13) so as to be capable of swivelling around a horizontal (30) and a vertical (31) axis and in that the two footing plates (16) can be connected to each other to form a supporting shield.

2. Supporting device as in claim 1, characterized in that the footing plates (16) consist of a foot plate (17) and a shield plate (18) which together form an obtuse angle (26), whereby the shield plates (18) are provided with connection devices (22).

3. Supporting device as in claim 1, characterized in that an articulated bracket (15) is provided between the legs (13) and the footing plate (16), said bracket being connected to the leg (13) via a horizontal rotary axis (30) and to the footing plate (60) via a vertical pivot pin (31).

4. Supporting device as in claim 3, characterized in that one end of a strut (19) attacks at the articulated bracket (15) on a first attachment loop (32), eccentrically in relation to the vertical pivot pin (31) while its other end attacks at the leg (13).

5. Supporting device as in claim 4, characterized in that a second attachment loop (33) is installed for the strut (19) and holds the footing plate (16) in position for horizontal force transfer.

6. Supporting device as in claim 4, characterized in that a pressure strut (20) is installed between the vehicle body (1) and the shield plate (18).

7. Supporting device as in claim 7, characterized in that the connecting devices of the footing plates (16) are supports (40) with a connection coupling (41) which are located in working position in front of the shield plates (18).

## Revendications

1. Dispositif d'appui pour un véhicule de dépannage comportant deux jambes (13) disposées en proximité des arêtes latérales du véhicule et pivotantes entre une position de transport et une position d'appui, les jambes (13) étant pourvues de plaques d'appui (16), **caractérisé** en ce que les plaques d'appui (16) sont reliées aux jambes (13) de manière pivotante autour d'un axe horizontal (30) et autour d'un axe vertical (31) et en ce que que les deux plaques d'appui (16) sont susceptibles d'être reliées entre eux, aux fins de former un bouclier d'appui.

2. Dispositif d'appui selon la revendication 1, **caractérisé** en ce que les plaques d'appui (16) sont composées d'une plaque de pied (17) et d'une plaque de bouclier (18) qui renferment un angle obtus (26) entre eux, les plaque de bouclier (18) comportant des moyens de liaison (22).

3. Dispositif d'appui selon la revendication 1, **caractérisé** en ce que une pièce d'articulation (15) est prévue entre la jambe (13) et la plaque d'appui (16), ladite pièce étant reliée à la jambe (13) par moyen de l'axe horizontal (30) et à la plaque d'appui (16) par moyen d'un pivot (31).

4. Dispositif d'appui selon la revendication 3, **caractérisé** en ce que une tige (19) est prévue dont une extrémité est reliée à une première attache (32) de la pièce d'articulation (15) excentriquement par rapport à l'axe vertical (31), et dont l'autre extrémité est reliée à la jambe (13).

5. Dispositif d'appui selon la revendication 4, **caractérisé** en ce que la jambe comporte une seconde attache (33) pour la tige (19) qui tient la plaque d'appui (16) dans la position pour application de force horizontale.

6. Dispositif d'appui selon la revendication 4, **caractérisé** en ce que une tige de pression (20) est disposée entre le corps du véhicule (1) et la plaque de bouclier (18).

7. Dispositif d'appui selon la revendication 2, **caractérisé** en ce que les moyens de liaison (22) des plaques d'appui (16) en position de travail sont des poutres (40) avec un joint de liaison (41).
